# EUROPEAN PATENT APPLICATION

(11) **EP 4 374 688 A1**
(43) Date of publication of application: **29.05.2024**
(21) Application number: 21770286.9
(22) Date of filing: 19.07.2021
(51) Int. Cl.: A01K 7/02

(54) **SYSTEM AND METHOD FOR SUPPLYING WATER TO IDENTIFIED ANIMALS**

(71) Applicant: Mora McGinity, Patricia Jacinta, 06010 Badajoz (ES)
(72) Inventor: SÁNCHEZ FERNÁNDEZ, María Pía, 06010 Badajoz (ES); MARTÍN GARCÍA, Juan Pablo, 06010 Badajoz (ES); PACHECO LORENZO, Diego, 06010 Badajoz (ES); MENDEZ CIBORRO, José Antonio, 06010 Badajoz (ES); MORA MCGINITY, Patricia Jacinta, 06010 Badajoz (ES)
(74) Representative: Pons
(86) International application number: PCT/ES2021/070532
(87) International publication number: WO 2023/002067

(57) **Abstract**

The present invention relates to a system and method for supplying water to identified animals (1) which supplies water to a drinking trough (10) depending on whether an identified animal (1) approaches it, providing a constant supply to the animals and preventing unidentified animals from accessing it. The system comprises a collection surface (2), a tank (5), a water pump (8), a device for controlling the water flow (9), a drinking trough (10), a power generator (11), identifiers (12), intended to be linked to the identified animals (1), and an automation panel (14) from which the opening or closing of the device for controlling the water flow (9) is controlled based on the presence of identified animals (1) in the vicinity of the drinking trough (10).

## Description

### OBJECT OF THE INVENTION

The present invention relates to a system and method for supplying water to identified animals, comprising a tank wherein rainwater is collected and a water pump that supplies the water to a drinking trough depending on whether an identified animal approaches it, providing a constant supply to the animals and preventing unidentified animals from accessing the supply of the drinking trough.

### BACKGROUND OF THE INVENTION

Currently, rain scarcity and the concentration and intensity of rainfall in short periods of time, together with long and hot summer periods and the restricted use of borehole wells due to the poor state of the aquifers, brings about a very delicate situation to ensure the continued supply of water in the fields.

In the agricultural sector, the ponds used in livestock breeding for supplying water for livestock are reduced by a large percentage each year, leading to a loss of water quality of the same. In addition, the delicate situation of the aquifers due to the abuse in the demand for water is added to this. Due to the scarcity and seasonality of the rains and the decrease in available water points, many wild animals enter private livestock breeding farms and consume water from the same supply points as livestock, being able to transmit diseases to them.

Currently there are devices for using rainwater for different uses, irrigation, livestock breeding, uses of non-potable water, etc. However, the devices of the state of the art allow the unwanted access of wild animals, with the problems of diseases and supply that this entails.

### DESCRIPTION OF THE INVENTION

The present invention relates to a system for supplying water to identified animals, comprising a collection surface equipped with an asphalt fabric intended to rest on a sloping ground surface and intended to collect rainwater, a tank partially arranged below the waterproofed surface and equipped with water inlet cavities and which is intended to be arranged in the lowest area of the ground surface, a water pump connected to the tank intended to extract water from the same, a device for controlling the water flow connected to the water pump that regulates the passage of water, a drinking trough intended to house the water coming from the tank, a power generator, a plurality of identifiers intended to be linked to the identified animals, an antenna arranged in the vicinity of the drinking trough that detects the presence of an identifier and issues an associated signal and an automation panel powered by the energy generator that is equipped with a receiver connected to the antenna, and a control unit that receives the information from the receiver and acts on the device for controlling the water flow based on the presence or absence of identified animals in the vicinity of the drinking trough.

In this way, water is only provided to the identified animals that approach the antenna, and, therefore, the drinking trough. Thus, on the one hand, wild animals are prevented from drinking from the same and, on the other, the water is prevented from stagnating. Due to the configuration of the system, efficient use of water is made since the drinking trough is only supplied with water when necessary. Additionally, diseases are controlled, since by providing water only to identified animals, wild animals are prevented from drinking from the same supply points, interacting with livestock and transmitting diseases to them.

Advantageously, the visual impact is practically zero, since the tank is buried and the collection area can be covered by a layer of stones that may be similar to those of the ground. The system is practically hidden, leaving on the surface only the drinking trough by means of which the animals drink and the elements of the electrical, electronic and water installation. In addition, it has a low impact on the area at the end of the useful life thereof since it is easy to disassemble and does not require civil works.

Likewise, it is completely self-sufficient in terms of energy since the power generator can be a solar module and does not require major works for the installation thereof.

In addition, the system can have a clock module and an SD card reader module, which enables data collection, since the system stores information on when it supplies water or not and the time when it is done, being able to establish consumption habits of the animals and foresee how long the cistern will be able to supply the livestock.

The tank can be for example a precast concrete tank and several precast tanks can be arranged in a modular way to suit the supply demands. In the same way, the waterproofed surface can vary in size according to needs.

The tank may have a cover and a main body arranged below the waterproofed surface. Preferably, the body is buried and the upper area thereof is arranged approximately flush with the waterproofed surface, thus facilitating the inlet of water when it rains, the space above the cover being able to be filled with soil or left uncovered.

The waterproofed surface can be any surface that enables the collection of rainwater and prevents it from seeping into the ground, preferably being an asphalt fabric or the like.

Likewise, the device for controlling the water flow can be any device capable of activating or deactivating the pump such as a pneumatic valve, a solenoid valve or the like.

Preferably, wireless identifiers can be radio frequency transponders or any device that emits a single signal wirelessly.

The present invention further discloses a method for supplying identified animals, comprising the steps of receiving the identification information from an identifier intended to be linked to an identified animal that approaches the vicinity of a drinking trough by means of an antenna, verifying the identification information by means of a receiver, and sending the information to a control unit and controlling the opening or closing of a device for controlling the water flow by means of the control unit based on the information received by the receiver.

### DESCRIPTION OF THE DRAWINGS

To complement the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, represent the following:
Figure 1 shows a longitudinal cross section view of a water supply system.
Figure 2 shows a perspective view of a water supply system.
Figure 3 shows a schematic view of the method for supplying identified animals.

### PREFERRED EMBODIMENT OF THE INVENTION

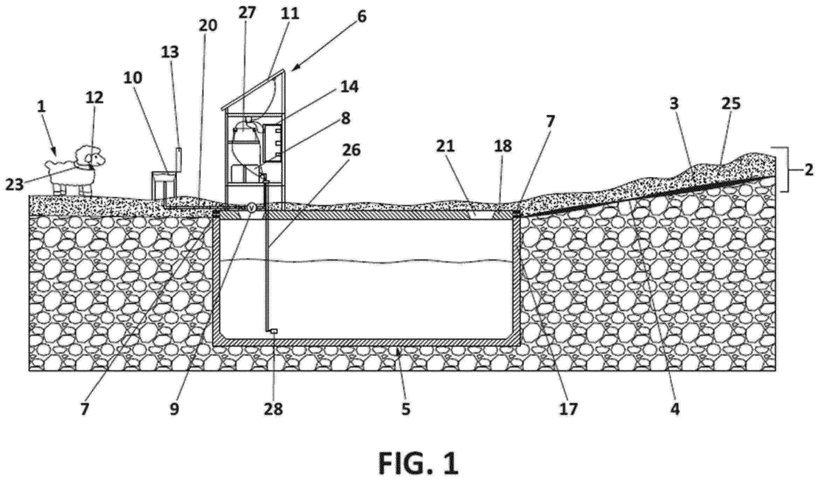

Figure 1 shows a longitudinal cross section view of a water supply system for identified animals (1), wherein the animals comprise an identifier (12) attached to an ear tag (23). The system has a collection surface (2) equipped with a waterproofed surface (3) intended to rest on a sloping ground surface (4), wherein the waterproofed surface (3) collects water from precipitation. The waterproofed surface (3) is secured to the ground surface (4) by means of pegs, and to the tank by means of aluminium profiles just below the water inlet cavities (7) through which the water enters the tank.

The system comprises a tank (5) that is partially arranged below the waterproofed surface (3) and is equipped with water inlet cavities (7). The tank is arranged in the lowest area of the ground surface (4), so that the water fills it by means of gravity.

The system comprises a water pump (8) connected to the tank (5) intended to extract the water, a device for controlling the water flow (9) connected to the water pump (8) that regulates the passage of water, a drinking trough (10), a power generator (11) that is a photovoltaic module, an antenna (13) in the vicinity of the drinking trough (10) that detects the presence of an identifier (12), and emits a signal and an automation panel (14) powered by the power generator (11) which is equipped with a receiver (15) connected to the antenna (13) and that receives the signal from the antenna (13) and validates it and a control unit (16) that receives the information from the receiver (15) and controls the opening or closing of the device for controlling the water flow (9) based on the identification information of the animals. The inlet orifices (7) are arranged on a perimeter edge of the cover (18). Additionally, the collection surface comprises a layer of stones (25) on top of the asphalt fabric (3) that act as a filter.

The system comprises a shed (6) on the tank (5) that houses the automation panel (14), the water pump (8) and the device for controlling the water flow (9) and on which the power generator (11), which is a photovoltaic module, rests. The main pipe (26) or water inlet tube that connects the tank (5) with the water pump (8) can be seen, which preferably comprises a filter (28) at the end thereof. The system has a water outlet tube (20) which starts from the device for controlling the water flow and feeds the drinking trough (10). The tank (5) comprises a main body (17) intended to receive the water and a cover (18) that covers it.

Additionally, said shed (6) also contains therein the regulator of the photovoltaic module with the batteries (27) and the corresponding circuit breaker thereof. All the electrical elements are connected to the regulator, which is responsible for distributing the power, ensuring the protection of the different elements and preventing the total discharge of the batteries (27). Connected to the automation panel (14) a set of LED lights is arranged which provides information about the status of the system. The equipment has two batteries (27) connected in series to add the 24V with which the system works.

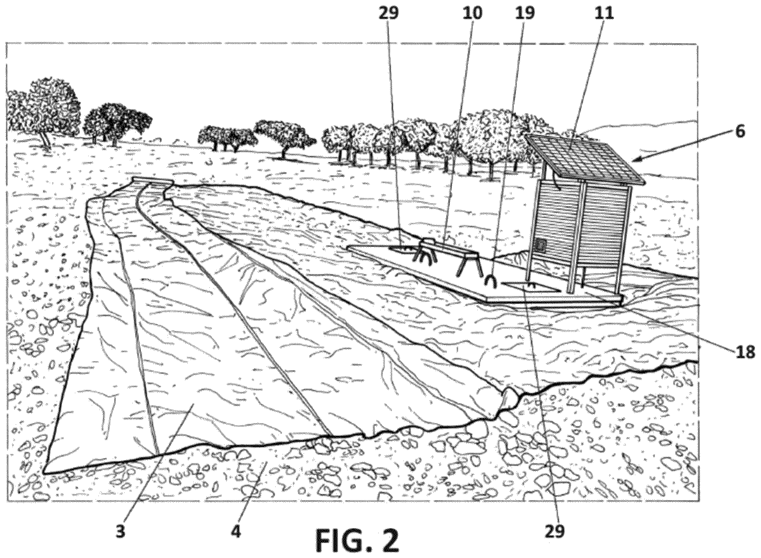

Figure 2 shows a perspective view of a water supply system, according to the present invention, wherein the layer of stones (25) has not yet been placed and the asphalt fabric (3) can be seen. The drinking trough (10) can be seen on top of the cover (18) and next to the shed (6) on which the power generator module (11), which is a solar module, is placed.

The cover (18) comprises through cavities (21) to be made in the cover (18) and closed by hatches (29) through which the inside of the tank (5) can be controlled. The cover (18) can also be seen equipped with rings (19) to facilitate the handling thereof.

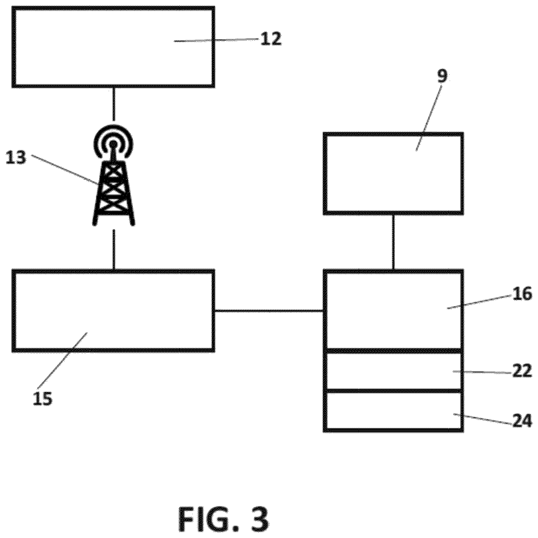

Figure 3 shows a schematic view of the method for supplying identified animals, comprising the steps of receiving the identification information from an identifier (12), which is a radio frequency transponder, intended to be linked to an identified animal (1) that approaches the vicinity of a drinking trough (10) by means of an antenna (13), verifying the identification information by means of a receiver (15) that is connected to the antenna (13), and sending the information to a control unit (16) and controlling the opening or closing of a device for controlling the water flow (9) by means of the control unit when it receives the information from the receiver (15). Additionally, it comprises the step of storing the date and time information obtained by means of a clock module (22) on an SD card of an SD card reader (24).

## Claims

1. A water supply system for identified animals (1), comprising:
- a collection surface (2) equipped with a waterproofed surface (3) intended to rest on a sloping ground surface (4) and which is intended to collect rainwater;
- a tank (5) partially arranged below the waterproofed surface (3) and equipped with water inlet cavities (7) intended to collect the water coming from the waterproofed surface (3) and wherein the tank (1) is intended to be arranged in the lowest area of the ground surface (4);
- a water pump (8) connected to the tank (5) intended to extract the water from it;
- a device for controlling the water flow (9) connected to the water pump (8) that regulates the passage of water;
- a drinking trough (10) intended to house the water coming from the tank (5);
- a power generator (11);
- a plurality of wireless identifiers (12) intended to be linked to the identified animals (1);
- an antenna (13) arranged in the vicinity of the drinking trough (10) that detects the presence of an identifier (12) and emits an associated signal;
- an automation panel (14) powered by the power generator (11) that is equipped with a receiver (15) connected to the antenna (13) that receives the signal from the antenna (13) and validates it, and a control unit (16) that receives the information from the receiver (15) and acts on the device for controlling the water flow (9) based on the presence or absence of identified animals (1) in the vicinity of the drinking trough (10).

2. The supply system of claim 1, comprising a shed (6) arranged on the tank (5) that houses the automation panel (14), the water pump (8) and the device for controlling the water flow (9).

3. The supply system of claim 1, wherein the tank (5) comprises a main body (17) arranged completely below the waterproofed surface (3) and which is intended to receive the water and a cover (18) that covers it, equipped with rings (19) to facilitate the handling thereof.

4. The supply system of claim 3, wherein the inlet holes (7) are arranged on a perimeter edge of the cover (18).

5. The supply system of claim 1, wherein the power generator (11) is a photovoltaic module.

6. The supply system of claim 1, comprising through cavities (21) to be made in the cover (18) and closed by hatches (29).

7. The supply system of claim 1, comprising a clock module (22) connected to the control unit (16) that detects the date and time when the device for controlling the water flow (9) opens.

8. The supply system of claim 7, comprising an SD card reader module (24) connected to the control unit (16) and equipped with an SD card that stores the information received by the receiver (15) and clock module (22).

9. The supply system of claim 1, comprising a layer of stones (25) on the waterproofed surface (3).

10. The system of claim 1, wherein the waterproofed surface (3) is an asphalt fabric.

11. The system of claim 1, wherein the device for controlling the water flow (9) is a solenoid valve.

12. The system of claim 1, wherein the identifiers (12) are radio frequency transponders.

13. A method for supplying identified animals (1) comprising the steps of
- receiving the identification information from an identifier (12) intended to be linked to an identified animal (1) that approaches the vicinity of a drinking trough (10) by means of an antenna (13);
- verifying the identification information by means of a receiver (15) and sending the information to a control unit (16);
- controlling the opening or closing of a device for controlling the water flow (9) by means of the control unit (16) based on the information received from the receiver (15).

14. The method of claim 13, comprising the step of storing the date and time information obtained by means of a clock module (22) on an SD card of an SD card reader (24).

## Amended claims

### Amended claims under Art. 19.1 PCT

1. A water supply system for identified animals (1), comprising:
- a collection surface (2) equipped with a waterproofed surface (3) intended to rest on a sloping ground surface (4) and which is intended to collect rainwater;
- a tank (5) partially arranged below the waterproofed surface (3) and equipped with water inlet cavities (7) intended to collect the water coming from the waterproofed surface (3) and wherein the tank (1) is intended to be arranged in the lowest area of the ground surface (4);
- a water pump (8) connected to the tank (5) intended to extract the water from it;
- a device for controlling the water flow (9) connected to the water pump (8) that regulates the passage of water;
- a drinking trough (10) intended to house the water coming from the tank (5);
- a power generator (11);
- a plurality of wireless identifiers (12) intended to be linked to the identified animals (1);
- an antenna (13) arranged in the vicinity of the drinking trough (10) that detects the presence of an identifier (12) and emits an associated signal;
- an automation panel (14) powered by the power generator (11) that is equipped with a receiver (15) connected to the antenna (13) that receives the signal from the antenna (13) and validates it, and a control unit (16) that receives the information from the receiver (15) and acts on the device for controlling the water flow (9) based on the presence or absence of identified animals (1) in the vicinity of the drinking trough (10).

2. The supply system of claim 1, comprising a shed (6) arranged on the tank (5) that houses the automation panel (14), the water pump (8) and the device for controlling the water flow (9).

3. The supply system of claim 1, wherein the tank (5) comprises a main body (17) arranged completely below the waterproofed surface (3) and which is intended to receive the water and a cover (18) that covers it, equipped with rings (19) to facilitate the handling thereof.

4. The supply system of claim 3, wherein the inlet holes (7) are arranged on a perimeter edge of the cover (18).

5. The supply system of claim 1, wherein the power generator (11) is a photovoltaic module.

6. The supply system of claim 1, comprising through cavities (21) to be made in the cover (18) and closed by hatches (29).

7. The supply system of claim 1, comprising a clock module (22) connected to the control unit (16) that detects the date and time when the device for controlling the water flow (9) opens.

8. The supply system of claim 7, comprising an SD card reader module (24) connected to the control unit (16) and equipped with an SD card that stores the information received by the receiver (15) and clock module (22).

9. The supply system of claim 1, comprising a layer of stones (25) on the waterproofed surface (3).

10. The system of claim 1, wherein the waterproofed surface (3) is an asphalt fabric.

11. The system of claim 1, wherein the device for controlling the water flow (9) is a solenoid valve.

12. The system of claim 1, wherein the identifiers (12) are radio frequency transponders.

13. A method for supplying identified animals (1) comprising the steps of
- providing a system according to claim 1;
- receiving the identification information from an identifier (12) intended to be linked to an identified animal (1) that approaches the vicinity of a drinking trough (10) by means of an antenna (13);
- verifying the identification information by means of a receiver (15) and sending the information to a control unit (16);
- controlling the opening or closing of a device for controlling the water flow (9) by means of the control unit (16) based on the information received from the receiver (15).

14. The method of claim 13, comprising the step of storing the date and time information obtained by means of a clock module (22) on an SD card of an SD card reader (24).
